# EUROPEAN PATENT APPLICATION

(11) **EP 4 447 397 A1**
(43) Date of publication of application: **16.10.2024**
(21) Application number: 22914514.9
(22) Date of filing: 23.12.2022
(51) Int. Cl.: H04L 41/16

(54) **INTENT MANAGEMENT METHOD AND COMMUNICATION APPARATUS**

(30) Priority: 29.12.2021 CN 202111645537
(71) Applicant: Huawei Technologies Co., Ltd., Shenzhen, Guangdong 518129 (CN)
(72) Inventor: LI, Yexing, Shenzhen, Guangdong 518129 (CN); LI, Xianming, Shenzhen, Guangdong 518129 (CN); YU, Yijun, Shenzhen, Guangdong 518129 (CN)
(74) Representative: Pfenning, Meinig & Partner mbB
(86) International application number: PCT/CN2022/141251
(87) International publication number: WO 2023/125260

(57) **Abstract**

This application provides an intent management method. The method includes: A first network element receives first information from a second network element, where the first information indicates that a first intent is not achieved; the first network element receives second information from the second network element, where the second information indicates that an intent operation corresponding to the first intent is not performed; and the first network element determines, based on the first information and the second information, not to adjust the first intent. In this way, intent management efficiency can be improved.

## Description

This application claims priority to Chinese Patent Application No. 202111645537.X, filed with the China National Intellectual Property Administration on December 29, 2021 and entitled "INTENT MANAGEMENT METHOD AND COMMUNICATION APPARATUS", which is incorporated herein by reference in its entirety.

### TECHNICAL FIELD

This application relates to the field of communication technologies, and more specifically, to an intent management method and a communication apparatus.

### BACKGROUND

At present, when performing automation work, a user may use a cognitive network management system to perform work. The cognitive network management system may include an intent consumption network element and an intent provision network element. The intent consumption network element may request the intent provision network element to execute an intent, to achieve an expectation on a managed entity network element. In a process of executing the intent, the intent provision network element may obtain, from a data analysis network element, an intent solution for executing the intent, generate an intent operation based on the intent solution, and then deliver the intent operation to the managed entity network element for performing.

In the process of executing the intent, obtaining the intent solution, generating the intent operation, and performing the intent operation take a specific period of time, and have different impact on the system in different phases. However, in a current intent management system, a management granularity of intent execution is for an entire intent execution process, and intent management efficiency is low. Therefore, an intent management method and a communication apparatus are urgently needed to improve intent management efficiency.

### SUMMARY

This application provides an intent management method and a communication apparatus, to improve intent management efficiency.

According to a first aspect, an intent management method is provided. The method may be performed by a first network element or a chip in a first network element. The method includes: A first network element receives first information from a second network element, where the first information indicates that a first intent is not achieved; the first network element receives second information from the second network element, where the second information indicates that an intent operation corresponding to the first intent is not performed; and the first network element determines, based on the first information and the second information, not to adjust the first intent.

Therefore, in this application, the first network element receives the first information indicating that the first intent is not achieved. Because the first network element also receives the second information indicating that the intent operation is not performed, the first network element does not adjust the first intent because the first network element mistakenly considers, due to receiving of the first information, that an exception occurs when the intent operation is performed or expected effect cannot be achieved after the intent operation is performed. The first network element may determine, based on the first information and the second information, that the first intent does not need to be adjusted. This avoids processes such as re-translation and solution generation caused by intent adjustment. Further, an intent achievement rate can be improved, and intent management efficiency can be improved.

With reference to the first aspect, in some implementations of the first aspect, that the second information indicates that an intent operation corresponding to the first intent is not performed includes: The intent operation corresponding to the first intent is not sent to a third network element, or the intent operation corresponding to the first intent is not performed after being sent to a third network element.

Therefore, in this application, the second network element may notify the first network element that the intent operation is not sent to the third network element or is not performed after being sent to the third network element. This improves flexibility of intent management.

With reference to the first aspect, in some implementations of the first aspect, when the first network element receives the first information from the second network element a plurality of times, that the first network element determines, based on the first information and the second information, not to adjust the first intent includes: The first network element determines, based on the first information and the second information, not to adjust the first intent.

Therefore, in this application, the first network element receives the first information a plurality of times. Because the first network element also receives the second information indicating that the intent operation is not performed, the first network element does not adjust the first intent because the first information is received predetermined quantity of times. This can improve intent management efficiency.

With reference to the first aspect, in some implementations of the first aspect, that the first network element determines, based on the first information and the second information, not to adjust the first intent includes: The first network element determines, based on the first information and the second information, not to perform any one of the following operations on the first intent: a modification operation, a deletion operation, or a deactivation operation.

According to a second aspect, an intent management method is provided. The method may be performed by a second network element or a chip in a second network element. The method includes: The second network element sends first information to a first network element, where the first information indicates that a first intent is not achieved; and the second network element sends second information to the first network element, where the second information indicates that an intent operation corresponding to the first intent is not performed.

Therefore, in this application, the second network element sends the first information and the second information to the first network element, and the first network element does not adjust the first intent because the first network element mistakenly considers, due to receiving of the first information, that an exception occurs when the intent operation is performed or expected effect cannot be achieved after the intent operation is performed. The first network element may determine, based on the first information and the second information, that the first intent does not need to be adjusted. This avoids processes such as re-translation and solution generation caused by intent adjustment. Further, an intent achievement rate can be improved, and intent management efficiency can be improved.

With reference to the second aspect, in some implementations of the second aspect, that the second information indicates that an intent operation corresponding to the first intent is not performed includes: The intent operation corresponding to the first intent is not sent to a third network element, or the intent operation corresponding to the first intent is not performed after being sent to a third network element.

According to a third aspect, an intent management method is provided. The method may be performed by a second network element or a chip in a second network element. The method includes: The second network element receives first time information from a first network element, where the first time information indicates first time in which the second network element sends feedback information, and the feedback information indicates whether a first intent is achieved; the second network element determines second time, where the second time is time for generating an intent operation corresponding to the first intent; and when the first time is shorter than the second time, the second network element sends first indication information to the first network element, where the first indication information indicates that the second network element does not send the feedback information within the first time, or the first indication information indicates that the second network element is to send the feedback information within third time, and the third time is determined based on the second time.

Therefore, in this application, the second network element determines the second time for generating the intent operation. If the second network element determines, by comparing the first time with the second time, that the intent operation cannot be generated within the first time, the second network element does not send the feedback information within the first time, but sends the first indication information to the first network element, to indicate that the feedback information is not sent or indicate that the feedback information is to be sent within the third time. This can reduce signaling resource consumption and improve intent management efficiency.

With reference to the third aspect, in some implementations of the third aspect, that the second network element determines second time includes: The second network element receives second time information from a fourth network element, where the second time information indicates fourth time for generating an intent solution corresponding to the first intent; and the second network element determines the second time based on the second time information.

Therefore, in this application, the second network element may obtain, from the fourth network element, the fourth time for generating the intent solution, to determine the fourth time for generating the intent operation. This can improve reliability of intent management.

With reference to the third aspect, in some implementations of the third aspect, the third time is time for completing the intent operation.

Therefore, in this application, the second network element may send the feedback information to the first network element after the intent operation is performed. This can improve intent management efficiency.

With reference to the third aspect, in some implementations of the third aspect, the method further includes: The second network element receives second indication information from the first network element, where the second indication information indicates the second network element to determine the second time.

Therefore, in this application, the first network element may indicate the second network element to determine the second time. This improves flexibility of intent management.

With reference to the third aspect, in some implementations of the third aspect, the method further includes: The second network element sends reason information to the first network element, where the reason information indicates a reason why the second network element does not send the feedback information within the first time.

Therefore, in this application, the second network element may notify the first network element of a reason why feedback cannot be performed on time. This improves flexibility of intent management.

According to a fourth aspect, an intent management method is provided. The method may be performed by a first network element or a chip in a first network element, and the method includes: The first network element sends first time information to a second network element, where the first time information indicates first time in which the second network element sends feedback information, the feedback information indicates whether a first intent is achieved, and the first time information is further used to determine second time; and when the first time is shorter than the second time, the first network element receives first indication information from the second network element, where the first indication information indicates that the second network element does not send the feedback information within the first time, or the first indication information indicates that the second network element is to send the feedback information within third time, and the third time is determined based on the second time.

Therefore, in this application, the second network element determines the second time for generating an intent operation. If the second network element determines, by comparing the first time with the second time, that the intent operation cannot be generated within the first time, the second network element does not send the feedback information within the first time, but sends the first indication information to the first network element, to indicate that the feedback information is not sent or indicate that the feedback information is to be sent within the third time. This can reduce signaling resource consumption and improve intent management efficiency.

With reference to the fourth aspect, in some implementations of the fourth aspect, the third time is time for completing the intent operation.

With reference to the fourth aspect, in some implementations of the fourth aspect, the method further includes: The first network element sends second indication information to the second network element, where the second indication information indicates the second network element to determine the second time.

With reference to the fourth aspect, in some implementations of the fourth aspect, the method further includes: The first network element receives reason information from the second network element, where the reason information indicates a reason why the second network element does not send the feedback information within the first time.

According to a fifth aspect, an intent management method is provided. The method may be performed by a second network element or a chip in a second network element, and the method includes: The second network element receives expectation information from a first network element, where the expectation information indicates expected time for completing an intent operation corresponding to a first intent; and the second network element sends solution indication information to a fourth network element based on the expectation information, where the solution indication information indicates to reduce time for generating an intent solution of the first intent.

Therefore, in this application, the first network element may send, to the second network element, the expectation information indicating the expected time for completing the intent operation, and the second network element may send, to the fourth network element, the solution indication information indicating to reduce the time for generating the intent solution. This can improve intent management efficiency.

With reference to the fifth aspect, in some implementations of the fifth aspect, the method further includes: The second network element determines time indication information based on the expectation information, where the time indication information indicates expected analysis time for generating the intent solution; and the second network element sends the time indication information to the fourth network element.

Therefore, in this application, the second network element may determine the expected analysis time for generating the intent solution, so that the fourth network element generates the intent solution within the analysis time. This further improves intent management efficiency.

With reference to the fifth aspect, in some implementations of the fifth aspect, the method further includes: The second network element determines, based on the expectation information, the expected analysis time for generating the intent solution, where the solution indication information further indicates the analysis time.

With reference to the fifth aspect, in some implementations of the fifth aspect, before the second network element receives the expectation information from the first network element, the method further includes: The second network element sends notification information to the first network element, where the notification information indicates estimated time for completing the intent operation.

Therefore, in this application, the first network element may send the expectation information to the second network element after receiving the notification information indicating the estimated time for completing the intent operation. This improves flexibility of an intent management system.

According to a sixth aspect, an intent management method is provided. The method may be performed by a fourth network element or a chip in a fourth network element, and the method includes: The fourth network element receives solution indication information from a second network element, where the solution indication information indicates to reduce time for generating an intent solution of a first intent; and the fourth network element generates the intent solution based on the solution indication information.

Therefore, in this application, the first network element may send, to the second network element, expectation information indicating expected time for completing an intent operation, and the second network element may send, to the fourth network element, the solution indication information indicating to reduce the time for generating the intent solution. This can improve intent management efficiency.

With reference to the sixth aspect, in some implementations of the sixth aspect, the method further includes: The fourth network element receives time indication information from the second network element, where the time indication information indicates expected analysis time for generating the intent solution.

With reference to the sixth aspect, in some implementations of the sixth aspect, the solution indication information further indicates the expected analysis time for generating the intent solution.

According to a seventh aspect, an intent management method is provided. The method may be performed by a first network element or a chip in a first network element. The method includes: The first network element generates expectation information, where the expectation information indicates expected time for completing an intent operation corresponding to a first intent; and the first network element sends the expectation information to a second network element.

Therefore, in this application, the first network element may send, to the second network element, the expectation information indicating the expected time for completing the intent operation, and the second network element may send, to the fourth network element, solution indication information indicating to reduce time for generating an intent solution. This can improve intent management efficiency.

With reference to the seventh aspect, in some implementations of the seventh aspect, the method further includes: The first network element receives notification information from the second network element, where the notification information indicates estimated time for completing the intent operation.

According to an eighth aspect, a communication apparatus for intent management is provided. The apparatus includes a processing unit and a transceiver unit. The transceiver unit is configured to receive first information from a second network element, where the first information indicates that a first intent is not achieved. The transceiver unit is further configured to receive second information from the second network element, where the second information indicates that an intent operation corresponding to the first intent is not performed. The processing unit is configured to determine, based on the first information and the second information, not to adjust the first intent.

Therefore, in this application, a first network element receives the first information indicating that the first intent is not achieved. Because the first network element also receives the second information indicating that the intent operation is not performed, the first network element does not adjust the first intent because the first network element mistakenly considers, due to receiving of the first information, that an exception occurs when the intent operation is performed or expected effect cannot be achieved after the intent operation is performed. The first network element may determine, based on the first information and the second information, that the first intent does not need to be adjusted. This avoids processes such as re-translation and solution generation caused by intent adjustment. Further, an intent achievement rate can be improved, and intent management efficiency can be improved.

With reference to the eighth aspect, in some implementations of the eighth aspect, that the second information indicates that an intent operation corresponding to the first intent is not performed includes: The intent operation corresponding to the first intent is not sent to a third network element, or the intent operation corresponding to the first intent is not performed after being sent to a third network element.

With reference to the eighth aspect, in some implementations of the eighth aspect, when the transceiver unit receives the first information a plurality of times, the processing unit is configured to determine, based on the first information and the second information, not to adjust the first intent.

With reference to the eighth aspect, in some implementations of the eighth aspect, the processing unit specifically determines, based on the first information and the second information, not to perform any one of the following operations on the first intent: a modification operation, a deletion operation, or a deactivation operation.

According to a ninth aspect, a communication apparatus for intent management is provided. The apparatus includes a processing unit and a transceiver unit. The processing unit is configured to generate first information and second information, where the first information indicates that a first intent is not achieved, and the second information indicates that an intent operation corresponding to the first intent is not performed. The transceiver unit is configured to send the first information and the second information to a first network element.

Therefore, in this application, a second network element sends the first information and the second information to the first network element, and the first network element does not adjust the first intent because the first network element mistakenly considers, due to receiving of the first information, that an exception occurs when the intent operation is performed or expected effect cannot be achieved after the intent operation is performed. The first network element may determine, based on the first information and the second information, that the first intent does not need to be adjusted. This avoids processes such as re-translation and solution generation caused by intent adjustment. Further, an intent achievement rate can be improved, and intent management efficiency can be improved.

With reference to the ninth aspect, in some implementations of the ninth aspect, that the second information indicates that an intent operation corresponding to the first intent is not performed includes: The intent operation corresponding to the first intent is not sent to a third network element, or the intent operation corresponding to the first intent is not performed after being sent to a third network element.

According to a tenth aspect, a communication apparatus for intent management is provided. The apparatus includes a processing unit and a transceiver unit. The transceiver unit is configured to receive first time information from a first network element, the first time information indicates first time in which a second network element sends feedback information, and the feedback information indicates whether a first intent is achieved. The processing unit is configured to determine second time, where the second time is time for generating an intent operation corresponding to the first intent. When the first time is shorter than the second time, the transceiver unit is further configured to send first indication information to the first network element, where the first indication information indicates that the second network element does not send the feedback information within the first time, or the first indication information indicates that the second network element is to send the feedback information within third time, and the third time is determined based on the second time.

Therefore, in this application, the second network element determines the second time for generating the intent operation. If the second network element determines, by comparing the first time with the second time, that the intent operation cannot be generated within the first time, the second network element does not send the feedback information within the first time, but sends the first indication information to the first network element, to indicate that the feedback information is not sent or indicate that the feedback information is to be sent within the third time. This can reduce signaling resource consumption and improve intent management efficiency.

With reference to the tenth aspect, in some implementations of the tenth aspect, the transceiver unit is further configured to receive second time information from a fourth network element, where the second time information indicates fourth time for generating an intent solution corresponding to the first intent. The processing unit is specifically configured to determine the second time based on the second time information.

With reference to the tenth aspect, in some implementations of the tenth aspect, the third time is time for completing the intent operation.

With reference to the tenth aspect, in some implementations of the tenth aspect, the transceiver unit is further configured to receive second indication information from the first network element, where the second indication information indicates the second network element to determine the second time.

With reference to the tenth aspect, in some implementations of the tenth aspect, the transceiver unit is further configured to send reason information to the first network element, where the reason information indicates a reason why the second network element does not send the feedback information within the first time.

According to an eleventh aspect, a communication apparatus for intent management is provided. The apparatus further includes a processing unit and a transceiver unit. The processing unit is configured to generate first time information. The transceiver unit is configured to send the first time information to a second network element, where the first time information indicates first time in which the second network element sends feedback information, the feedback information indicates whether a first intent is achieved, and the first time information is further used to determine second time. When the first time is shorter than the second time, the transceiver unit is further configured to receive first indication information from the second network element, where the first indication information indicates that the second network element does not send the feedback information within the first time, or the first indication information indicates that the second network element is to send the feedback information within third time, and the third time is determined based on the second time.

Therefore, in this application, the second network element determines the second time for generating an intent operation. If the second network element determines, by comparing the first time with the second time, that the intent operation cannot be generated within the first time, the second network element does not send the feedback information within the first time, but sends the first indication information to a first network element, to indicate that the feedback information is not sent or indicate that the feedback information is to be sent within the third time. This can reduce signaling resource consumption and improve intent management efficiency.

With reference to the eleventh aspect, in some implementations of the eleventh aspect, the third time is time for completing the intent operation.

With reference to the eleventh aspect, in some implementations of the eleventh aspect, the transceiver unit is further configured to send second indication information to the second network element, where the second indication information indicates the second network element to determine the second time.

With reference to the eleventh aspect, in some implementations of the eleventh aspect, the transceiver unit is further configured to receive reason information from the second network element, where the reason information indicates a reason why the second network element does not send the feedback information within the first time.

According to a twelfth aspect, a communication apparatus for intent management is provided. The apparatus includes a processing unit and a transceiver unit. The transceiver unit is configured to receive expectation information from a first network element, where the expectation information indicates expected time for completing an intent operation corresponding to a first intent. The processing unit is configured to determine solution indication information based on the expectation information. The transceiver unit is further configured to send the solution indication information to a fourth network element, where the solution indication information indicates to reduce time for generating an intent solution of the first intent.

Therefore, in this application, the first network element may send, to a second network element, the expectation information indicating the expected time for completing the intent operation, and the second network element may send, to the fourth network element, the solution indication information indicating to reduce the time for generating the intent solution. This can improve intent management efficiency.

With reference to the twelfth aspect, in some implementations of the twelfth aspect, the processing unit is further configured to determine time indication information based on the expectation information, where the time indication information indicates expected analysis time for generating the intent solution. The transceiver unit is further configured to send the time indication information to the fourth network element.

With reference to the twelfth aspect, in some implementations of the twelfth aspect, the processing unit is configured to determine, based on the expectation information, the expected analysis time for generating the intent solution, where the solution indication information further indicates the analysis time.

With reference to the twelfth aspect, in some implementations of the twelfth aspect, before the transceiver unit is configured to receive the expectation information from the first network element, the transceiver unit is further configured to send notification information to the first network element, where the notification information indicates estimated time for completing the intent operation.

According to a thirteenth aspect, a communication apparatus for intent management is provided. The apparatus includes a processing unit and a transceiver unit. The transceiver unit is configured to receive solution indication information from a second network element, where the solution indication information indicates to reduce time for generating an intent solution of a first intent. The processing unit is configured to generate the intent solution based on the solution indication information.

Therefore, in this application, a first network element may send, to the second network element, expectation information indicating expected time for completing an intent operation, and the second network element may send, to a fourth network element, the solution indication information indicating to reduce the time for generating the intent solution. This can improve intent management efficiency.

With reference to the thirteenth aspect, in some implementations of the thirteenth aspect, the transceiver unit is further configured to receive time indication information from the second network element, where the time indication information indicates expected analysis time for generating the intent solution.

With reference to the thirteenth aspect, in some implementations of the thirteenth aspect, the solution indication information further indicates the expected analysis time for generating the intent solution.

According to a fourteenth aspect, a communication apparatus for intent management is provided. The apparatus includes a processing unit and a transceiver unit. The processing unit is configured to generate expectation information, where the expectation information indicates expected time for completing an intent operation corresponding to a first intent. The transceiver unit is configured to send the expectation information to a second network element.

Therefore, in this application, a first network element may send, to the second network element, the expectation information indicating the expected time for completing the intent operation, and the second network element may send, to a fourth network element, solution indication information indicating to reduce time for generating an intent solution. This can improve intent management efficiency.

With reference to the fourteenth aspect, in some implementations of the fourteenth aspect, the transceiver unit is further configured to receive notification information from the second network element, where the notification information indicates estimated time for completing the intent operation.

According to a fifteenth aspect, a communication apparatus is provided. The apparatus may include a processing unit, a sending unit, and a receiving unit. Optionally, the sending unit and the receiving unit may alternatively be a transceiver unit.

When the apparatus is a first network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the first network element to perform any method according to the first aspect to the seventh aspect. When the apparatus is a chip in a first network element, the processing unit may be a processor, and the sending unit and the receiving unit may be an input/output interface, a pin, a circuit, or the like. The processing unit executes instructions stored in a storage unit, to enable the chip to perform any method according to the first aspect to the seventh aspect. The storage unit is configured to store the instructions. The storage unit may be a storage unit (for example, a register or a cache) in the chip, or may be a storage unit (for example, a read-only memory or a random access memory) that is in the first network element and that is located outside the chip.

When the apparatus is a second network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the second network element to perform any method according to the first aspect to the seventh aspect. When the apparatus is a chip in a second network element, the processing unit may be a processor, and the sending unit and the receiving unit may be an input/output interface, a pin, a circuit, or the like. The processing unit executes instructions stored in a storage unit, to enable the chip to perform any method according to the first aspect to the seventh aspect. The storage unit is configured to store the instructions. The storage unit may be a storage unit (for example, a register or a cache) in the chip, or may be a storage unit (for example, a read-only memory or a random access memory) that is in the second network element and that is located outside the chip.

When the apparatus is a fourth network element, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the fourth network element to perform any method according to the third aspect to the seventh aspect. When the apparatus is a chip in a fourth network element, the processing unit may be a processor, and the sending unit and the receiving unit may be an input/output interface, a pin, a circuit, or the like. The processing unit executes instructions stored in a storage unit, to enable the chip to perform any method according to the third aspect to the seventh aspect. The storage unit is configured to store the instructions. The storage unit may be a storage unit (for example, a register or a cache) in the chip, or may be a storage unit (for example, a read-only memory or a random access memory) that is in the fourth network element and that is located outside the chip.

According to a sixteenth aspect, a communication apparatus is provided. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement any method according to the first aspect to the seventh aspect by using a logic circuit or executing code instructions.

According to a seventeenth aspect, a computer-readable storage medium is provided. The computer-readable storage medium stores a computer program or instructions, and when the computer program or the instructions are executed, any method according to the first aspect to the seventh aspect is implemented.

According to an eighteenth aspect, a computer program product including instructions is provided. When the instructions are run, any method according to the first aspect to the seventh aspect is implemented.

According to a nineteenth aspect, a computer program is provided. The computer program includes code or instructions, and when the code or the instructions are run, the method according to any one of the possible implementations of the first aspect to the seventh aspect is implemented.

According to a twentieth aspect, a chip system is provided. The chip system includes a processor, and may further include a memory, configured to implement at least one method described in the first aspect to the seventh aspect. The chip system may include a chip, or may include a chip and another discrete component.

According to a twenty-first aspect, a communication system is provided. The system includes the apparatus according to any one of the eighth aspect and the ninth aspect, or the tenth aspect and the eleventh aspect, or the twelfth aspect to the fourteenth aspect.

In some implementations, the first network element may be an intent consumption network element, the second network element may be an intent provision network element, the third network element may be a management entity network element, and the fourth network element is an analysis service network element.

### BRIEF DESCRIPTION OF DRAWINGS

FIG. 1 is a diagram of an intent management system applicable to an embodiment of this application;
FIG. 2 is a diagram of an intent execution process applicable to an embodiment of this application;
FIG. 3 is a schematic flowchart of an example of an intent management method according to an embodiment of this application;
FIG. 4 is a schematic flowchart of an example of another intent management method according to an embodiment of this application;
FIG. 5 is a schematic flowchart of an example of still another intent management method according to an embodiment of this application;
FIG. 6 is a schematic flowchart of an example of still another intent management method according to an embodiment of this application;
FIG. 7 is a schematic flowchart of an example of still another intent management method according to an embodiment of this application;
FIG. 8 is a schematic flowchart of an example of still another intent management method according to an embodiment of this application;
FIG. 9 is a schematic flowchart of an example of still another intent management method according to an embodiment of this application; and
FIG. 10 and FIG. 11 are diagrams of structures of possible communication apparatuses according to an embodiment of this application.

### DESCRIPTION OF EMBODIMENTS

The following describes the technical solutions in this application with reference to the accompanying drawings.

The technical solutions in this application may be applied to various network function virtualization (network function virtualization, NFV) systems. In the system, a current service technical solution, a network construction solution, and a network operation and maintenance method of an operator may be described as modes and strategies by using a standard formal language, and the technical solution and the construction solution are implemented based on the modes and the strategies. For example, the technical solutions in this application may be applied to one or more of the following systems: a wireless intent driven network (wireless intent driven network, WIDN) system, an experiential networked intelligence (experiential networked intelligence, ENI) system, an intent driven management service (intent driven management service, IDMS) system, an open network automation platform (open network automation platform, ONAP) system, or the like.

For clarity, the following explains some terms in embodiments of this application.

Intent: The intent means an expectation on a system. The intent may include one or more of the following: a requirement, an intent objective, and a constraint.

Intent instance: The intent instance means an object obtained by instantiating an intent. For example, in this application, an intent may be replaced with an intent instance.

Intent expression: The intent expression is an expression used to carry an intent. The expression includes one or more of the following items: an intent action name, an intent action attribute, an intent action object name, and an intent action object attribute. The intent expression has specific syntax and semantics.

Intent objective: The intent objective indicates an objective value that needs to be achieved by an intent.

Intent translation: Intent translation is a procedure of translating an intent into an intent-executable command, a rule, or a sub-intent.

Intent execution: Intent execution means delivering an intent-executable command, a sub-intent, or a rule, and adjusting the intent-executable command, the sub-intent, or the rule based on a network environment and an intent achievement status.

Intent-executable command: The intent-executable command means a series of instructions formed by performing operations such as translation and decision on an intent.

Intent schema: The intent schema specifies syntax and semantics of an intent expression. The intent schema may include one or more of the following: a field, a value range of the field, a type of the field, and a hierarchical relationship between fields. For example, a field may be used to describe a type, a name, or a consumer of an intent schema.

Intent status: The intent status includes an activated state, a conflict state, a deactivated state, a sleep state, or the like. An intent in the activated state may be understood as that the intent is being executed. An intent in the conflict state may be understood as that the intent conflicts with an intent in the system. An intent in the deactivated state may be understood as that the intent is not executed. An intent in the sleep state may be understood as that an intent objective of the intent is temporarily stopped because the intent is not achieved for a long time.

Intent creation: Intent creation means creating an intent in an intent system and creating a corresponding intent context.

Intent knowledge: The intent knowledge is a related parameter of an intent schema stored in an intent knowledge base. For example, the related parameter may include one or more of the following: an executable operation corresponding to an intent, an intent action entity identifier, or an intent action entity type.

Intent solution: The intent solution is an intent execution solution corresponding to an intent expression. The intent solution may be used to determine an intent operation that needs to be performed to execute an intent.

Intent operation: The intent operation is an executable operation corresponding to an intent objective. The intent operation includes one or more intent sub-operations.

Intent sub-operation: The intent sub-operation is a component of an intent operation. One intent sub-operation may include one or more operation instructions, and the one or more operation instructions are executed by one execution object.

Intent maintenance: Intent maintenance means adjusting, based on a change of a system network environment, an executable operation corresponding to an intent, to achieve an intent obj ective.

Intent achievement: Intent achievement means that a system detects that a KPI value on a network reaches an objective value in an intent expression, in other words, an intent objective is achieved.

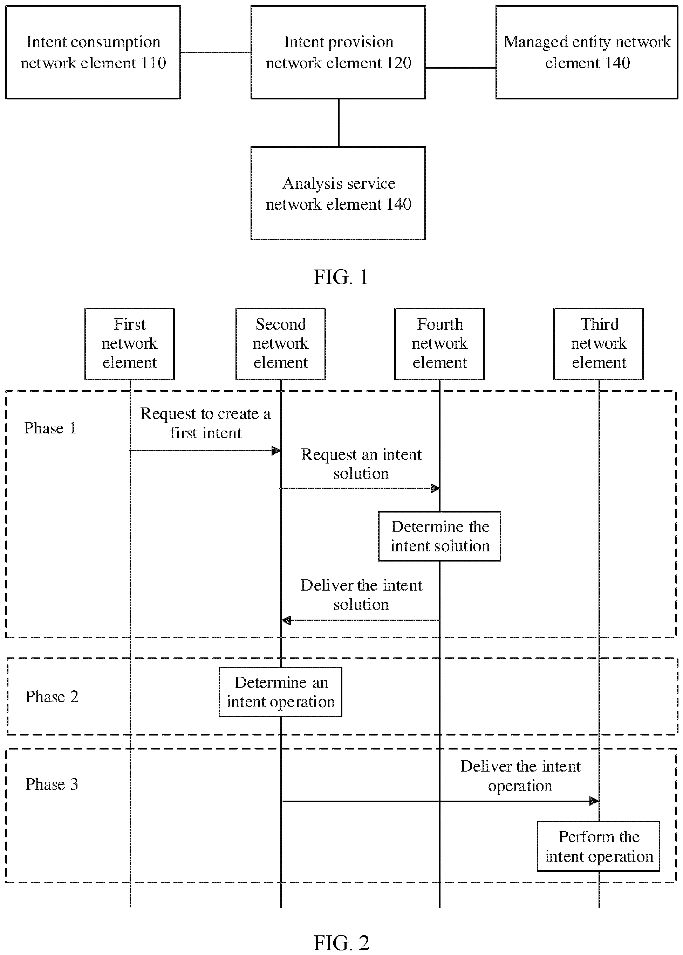

For ease of understanding of embodiments of this application, an intent management system applicable to a method provided in embodiments of this application is first described in detail with reference to FIG. 1. FIG. 1 is a diagram of an intent management system 100 applicable to a method provided in embodiments of this application. As shown in FIG. 1, the system 100 includes an intent consumption network element 110, an intent provision network element 120, an analysis service network element 130, and a managed entity (managed entity) network element 140.

The intent consumption network element 110 may also be referred to as an intent consumer, and is a consumption subject of an intent. For example, the intent consumption network element 110 may be an operations support system (operations support system, OSS), a business support system (business support system, BSS), an application (application, APP), or another user equipment. For an IDMS system, the intent consumption network element 110 may be a service consumer or a management service (management service, MnS) network element, for example, a network management system (network management system, NMS). The intent consumption network element 110 may communicate with the intent provision network element 120. For example, the intent consumption network element 110 may send a request for creating or implementing the intent to the intent provision network element 120.

The intent provision network element 120 may also be referred to as an intent production network element, an intent provider, or an intent producer. For the IDMS system, the intent provision network element 120 may be an intent service provider, for example, a device management system (element management system, EMS). The intent provision network element 120 can receive, from the intent consumption network element 110, the request for implementing the intent, and execute the intent to achieve an intent objective.

The analysis service network element 130 may provide an analysis service for execution of the intent. For example, the analysis service network element 130 may be a management data analysis service (management data analysis function, MDAF) network element, or a product that can generate an optimization suggestion according to a requirement, for example, an energy saving product. In this application, the analysis service network element 130 can receive, from the intent provision network element 120, a task setting that requests to perform intent analysis, generate an intent solution, and send the intent solution to the intent provision network element 120.

The managed entity network element 140 may include at least one network device, and each network device may communicate with the intent provision network element 120. For example, the intent provision network element 120 may send an intent operation to any network device in the managed entity network element 140.

It should be noted that the solutions in this application may be applied to another system including a corresponding network element. This is not limited in this application. It may be understood that the foregoing network element or function may be a network element in a hardware device, a software function running on dedicated hardware, or a virtualized function instantiated on a platform (for example, a cloud platform). Optionally, the foregoing network element or function may be implemented by one device, or may be jointly implemented by a plurality of devices, or may be a function module in one device. This is not specifically limited in embodiments of this application.

It should be noted that, in the following embodiments of a method 200 to a method 900, a first network element may be the foregoing intent consumption network element, a second network element may be the foregoing intent provision network element, a third network element may be the foregoing managed entity network element, and a fourth network element may be the foregoing analysis service network element.

In this application, a process of executing a first intent may include three phases. FIG. 2 is a diagram of the three phases. It should be understood that the diagram is merely an example. The process of executing the first intent may further include other steps. FIG. 2 describes only steps related to the three phases.

### Phase 1: intent solution generation phase

This phase includes a process in which the first network element requests the second network element to create the first intent, the second network element requests the fourth network element for the intent solution, the fourth network element determines the intent solution, and the fourth network element delivers the intent solution to the second network element.

### Phase 2: intent operation generation phase

This phase may also be understood as a phase in which the intent solution is converted into an intent operation, and this phase includes a process in which the second network element determines the intent operation. For example, the second network element determines a to-be-executed intent solution from one or more received intent solutions, and determines, based on the intent solution, the intent operation that needs to be executed.

### Phase 3: intent operation performing phase

This phase includes a process in which the second network element delivers the intent operation to the third network element, and the third network element performs the intent operation. In Phase 3, the third network element may include a plurality of network devices that perform the intent operation. In this case, Phase 3 includes a process in which each network device receives the intent operation and performs the intent operation.

It can be learned that, in Phase 1, the second network element does not convert the intent solution into the intent operation. In Phase 1 and Phase 2, the second network element does not deliver the intent operation to the fourth network element. If the second network element sends, to the first network element in the processes of Phase 1 and Phase 2, feedback information indicating that the first intent is not achieved, the first network element may adjust the first intent because the first network element mistakenly considers that an exception occurs when the intent operation is performed or that expected effect cannot be achieved after the intent operation is performed. This reduces intent achievement efficiency. In addition, sending of the feedback information also causes a waste of resources and time.

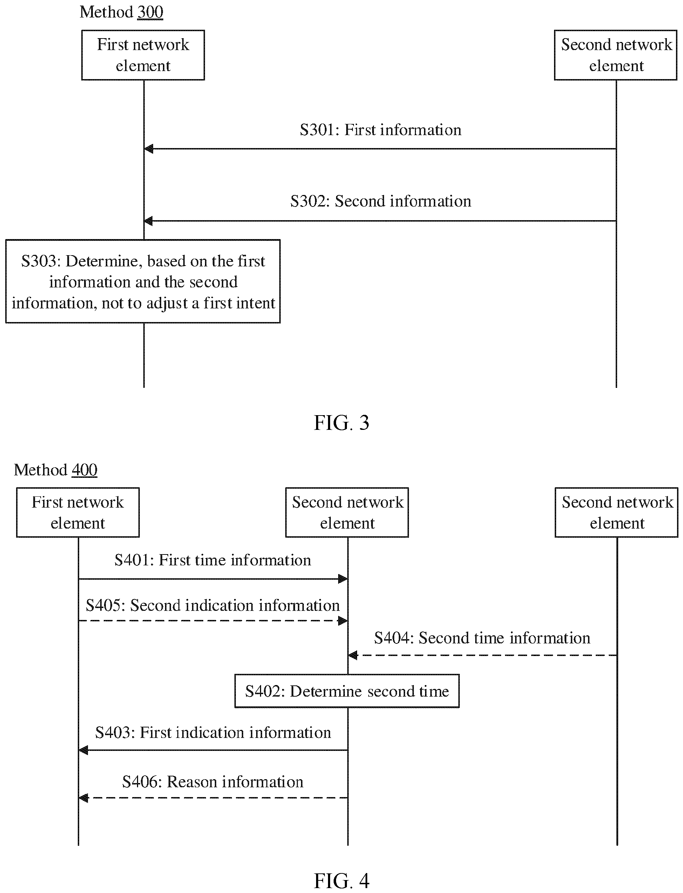

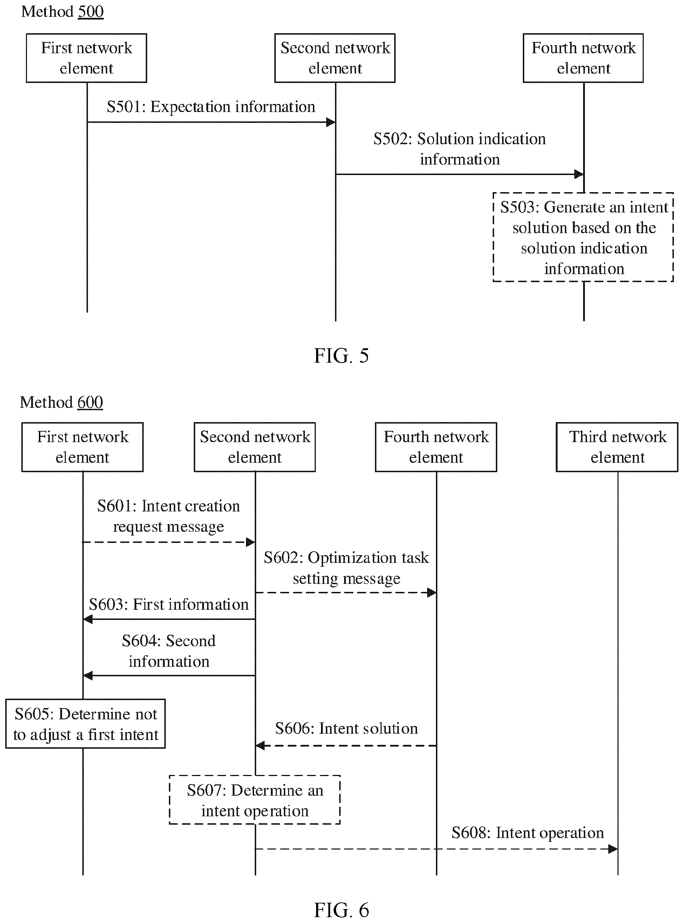

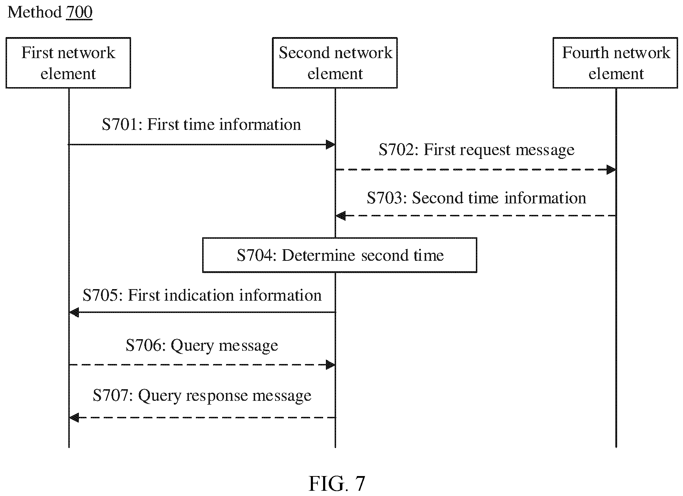

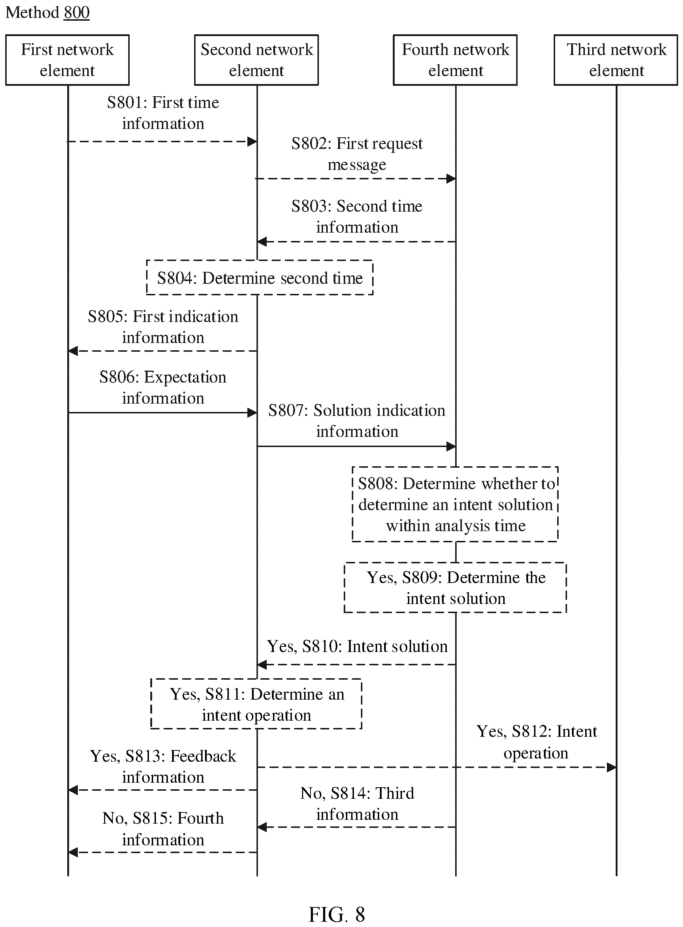

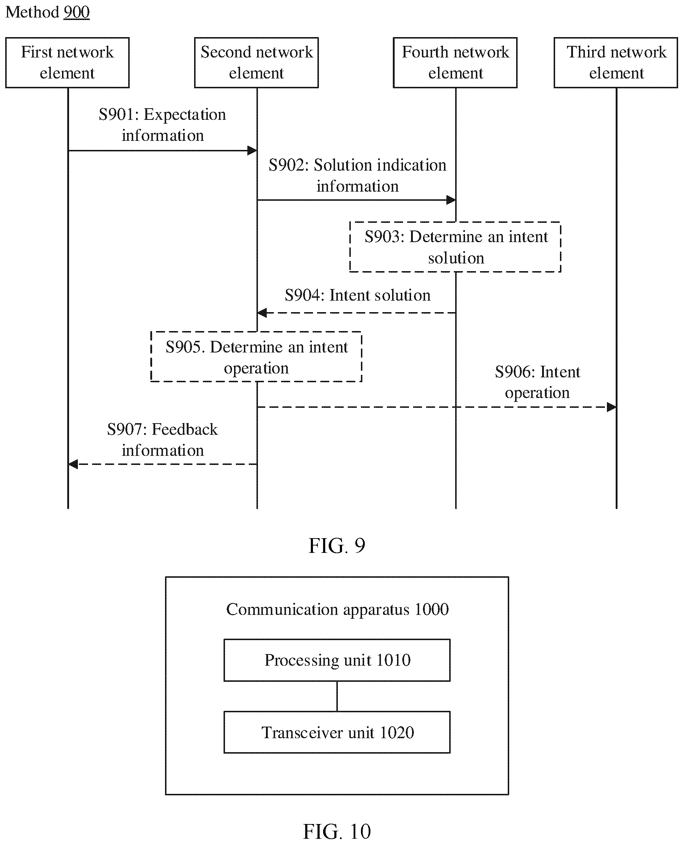

Therefore, this application provides an intent management method and a communication apparatus, to improve intent management efficiency. The following first describes the intent management method. The method embodiments shown in FIG. 3 to FIG. 9 may be combined with FIG. 2 in a description process. For descriptions of Phase 1, Phase 2, or Phase 3, refer to the descriptions in FIG. 2. In addition, the method embodiments shown in FIG. 3 to FIG. 9 may be combined with each other, and the steps in the method embodiments shown in FIG. 3 to FIG. 9 may be mutually referenced. For example, in embodiments of this application, the communication apparatus may implement functions of the method embodiments shown in FIG. 3 and FIG. 5, or may implement functions of the method embodiments shown in FIG. 4 and FIG. 5. The method embodiment shown in FIG. 6 may be an implementation of implementing the functions of the method embodiment shown in FIG. 3. The method embodiment shown in FIG. 7 may be an implementation of implementing the functions of the method embodiment shown in FIG. 4. The method embodiment shown in FIG. 8 may be an implementation of implementing the functions of the method embodiments shown in FIG. 4 and FIG. 5. The method embodiment shown in FIG. 9 may be an implementation of implementing the functions of the method embodiment shown in FIG. 5.

FIG. 3 is a schematic flowchart of an intent management method 300 according to an embodiment of this application.

S301: A second network element sends first information to a first network element, and correspondingly, the first network element receives the first information from the second network element.

The first information indicates that a first intent is not achieved.

It should be understood that the first intent is not achieved means that a parameter value related to a managed entity network element does not reach an intent objective of the first intent. A possible case in which the intent objective is not achieved includes one or more of the following: The first intent is still being executed, an exception occurs during execution of the first intent, execution of the first intent fails, or the intent objective is not achieved after execution of the first intent is completed.

Optionally, the first network element sends, to the second network element, an intent creation request message used to request to create the first intent, and the second network element sends a feedback message to the first network element in response to the intent creation request message, where the feedback message carries the first information. In this case, the first information may indicate that the first intent is not achieved when the second network element sends the feedback message.

S302: The second network element sends second information to the first network element, and correspondingly, the first network element receives the second information from the second network element.

The second information indicates that an intent operation corresponding to the first intent is not performed.

That an intent operation corresponding to the first intent is not performed may include any one of the following two cases.

### Case 1:

The intent operation corresponding to the first intent is not sent to a third network element.

This means that execution of the first intent is still in Phase 1 or Phase 2 described in FIG. 2, that is, the first intent is still in the intent solution generation phase or the intent operation generation phase.

### Case 2:

The intent operation corresponding to the first intent is not performed after being sent to the third network element.

This means that execution of the first intent is still in a phase before Phase 3 in which the third network element performs the intent operation, namely, a phase in which the third network element receives the intent operation but does not perform the intent operation.

Optionally, the feedback message sent by the second network element to the first network element in response to the intent creation request message further carries the second information. In this case, the second information may indicate that the intent operation of the first intent is not performed when the second network element sends the feedback message.

It should be understood that when the second network element sends the first information and the second information to the first network element, a reason why the first intent is not achieved is not a reason that may occur in a process in which the third network element performs the intent operation or after the third network element performs the intent operation.

S303: The first network element determines, based on the first information and the second information, not to adjust the first intent.

For example, the first network element determines, based on the first information and the second information, that the reason why the first intent is not achieved is not the reason that may occur in the process in which the third network element performs the intent operation or after the third network element performs the intent operation. Therefore, the first network element may not adjust the first intent.

Optionally, not adjusting the first intent means: not performing any one of the following operations on the first intent: a modification operation, a deletion operation, or a deactivation operation.

The modification operation may be an operation, for example, modifying an intent objective of the first intent or modifying an intent expression of the first intent. The deletion operation may be an operation of no longer executing the first intent. The deactivation operation may be an operation of suspending the first intent and temporarily not executing the first intent.

In a possible manner, the first network element receives the first information a plurality of times, and the first network element determines, based on the first information and the second information that are received a plurality of times, not to adjust the first intent.

For example, the second network element periodically sends the feedback message to the first network element, and presets that the first intent is adjusted if the first information indicating that the first intent is not achieved is carried in N feedback messages, where N is a positive integer. If feedback messages that are sent by the second network element the first N times carry the first information and carry the second information indicating that the intent operation is not performed, the second network element does not perform an action of adjusting the first intent because of the first information received N times, but determines, based on the second information, not to adjust the first intent.

Therefore, in this application, the first network element receives, one or more times, the first information indicating that the first intent is not achieved. Because the first network element also receives the second information indicating that the intent operation is not performed, the first network element does not adjust the first intent because the first network element mistakenly considers, due to receiving of the first information or reaching of a predetermined quantity of times of receiving of the first information, that an exception occurs when the intent operation is performed or expected effect cannot be achieved after the intent operation is performed. The first network element may determine, based on the first information and the second information, that the first intent does not need to be adjusted. This avoids processes such as re-translation and solution generation caused by intent adjustment. Further, an intent achievement rate can be improved, and intent management efficiency can be improved.

FIG. 4 is a schematic flowchart of an intent management method 400 according to an embodiment of this application.

S401: A first network element sends first time information to a second network element, and correspondingly, the second network element receives the first time information from the first network element.

The first time information indicates first time in which the second network element sends feedback information, and the feedback information indicates whether a first intent is achieved.

The first time may be a time period, and the second network element may determine, based on the first time, a moment for sending the feedback information. The first time information may indicate the second network element to send the feedback information within the first time. For example, the first time information may indicate, by using a field indicating a time period of two hours, the second network element to send the feedback information within two hours after receiving the first time information. The first time information may alternatively indicate the second network element to periodically send the feedback information within the first time. In this case, the first time information may alternatively indicate a periodicity of sending the feedback information. For example, the first time information may indicate, by using a field indicating a time period of two hours and a field indicating a periodicity of one hour, the second network element to send the feedback information at an interval of one hour within two hours after receiving the first time information.

It should be understood that a manner in which time information indicates time is not particularly limited in this application. When the time information indicates a time period, a start point of the time period may be a time point at which the time information is received or sent, or may be another time point.

Optionally, the first network element may add the first time information to an intent creation request message used to request to create the first intent.

S402: The second network element determines second time, where the second time is time for generating an intent operation corresponding to the first intent.

The second time may be a time period, and the second time may include time of generating the intent solution in Phase 1 and time of generating the intent operation in Phase 2 that are described in FIG. 2. For example, the second time may be time from receiving the first time information to determining the intent operation by the second network element.

The second network element may determine, based on an intent expression of the first intent and a running status of a system, time required for generating the intent operation.

S403: When the first time is shorter than the second time, the second network element sends first indication information to the first network element, and correspondingly, the first network element receives the first indication information from the second network element.

That the first time is shorter than the second time may be understood as follows: The second network element determines that the intent operation cannot be generated within the first time.

In a first implementation, the first indication information indicates that the second network element does not send the feedback information within the first time.

Alternatively, the first indication information indicates that the second network element does not send, within the first time, the information indicating whether the first intent is achieved.

For example, if the first network element indicates the second network element to send the feedback information within two hours after receiving the first time information, the second network element may send the first indication information within two hours after receiving the first time information or when it is two hours after the first time information is received. The first indication information may directly indicate that the second network element does not send the feedback information within the two hours, or may indicate, by indicating that the intent operation is not generated, that the second network element does not send the feedback information within the two hours. Further, the first network element may determine, based on the first indication information, not to adjust the first intent.

For that the first intent is not achieved, refer to the descriptions in step S301 in the method 300. For that the first intent is not adjusted, refer to the descriptions in step S303 in the method 300.

Therefore, in the first implementation, the second network element determines the second time for generating the intent operation, and determines, by comparing the first time with the second time, that the intent operation cannot be generated within the first time, so that the second network element sends the first indication information to the first network element within the first time, where the first indication information indicates that no feedback information is sent.

In a second implementation, the first indication information indicates that the second network element is to send the feedback information within third time.

The third time is determined based on the second time.

Optionally, the third time is time for completing the intent operation. That is, the third time includes time in Phase 1, Phase 2, and Phase 3 described in FIG. 2.

Alternatively, optionally, the third time is time for generating the intent operation. That is, the third time may be the same as the second time.

Alternatively, optionally, the third time is time for starting to perform the intent operation, or time for completing delivering of the intent operation. The time for starting to perform the intent operation includes time for delivering the intent operation in Phase 1, Phase 2, and Phase 3 that are described in FIG. 2.

The first network element may determine, based on the first indication information, not to adjust the first intent within the third time.

For example, the first indication information may implicitly indicate that the second network element does not send the feedback information within the first time, or the first indication information may implicitly indicate that the intent operation corresponding to the first intent is not generated, and that the first intent is not achieved within the first time. When the third time is the time for completing the intent operation, the first indication information may alternatively implicitly indicate that the second network element estimates to complete the intent operation within the third time. When the third time is the time for generating the intent operation, the first indication information may alternatively implicitly indicate that the second network element estimates to generate the intent operation within the third time. When the third time is the time for starting to perform the intent operation, the first indication information alternatively implicitly indicates that the second network element estimates to start to perform the intent operation within the third time, or to complete delivery of the intent operation within the third time.

Therefore, in the second implementation, the second network element determines the second time for generating the intent operation, and determines, by comparing the first time with the second time, that the intent operation cannot be generated within the first time, so that the second network element notifies the first network element that the feedback information is to be sent within the third time.

Optionally, in an implementation in which the second network element determines the second time, before step S402, the method 400 further includes step S404.

Optionally, in S404, a fourth network element sends second time information to the second network element, and correspondingly, the second network element receives the second time information from the fourth network element.

The second time information indicates fourth time for generating an intent solution corresponding to the first intent.

In step S402, the second network element determines the second time based on the second time information.

The fourth time may include the time in Phase 1 described in FIG. 2.

For example, after receiving the first time information, the second network element may send, to the fourth network element, a request message for request to obtain the fourth time, and the fourth network element determines, based on the request message, the estimated fourth time (namely, the time in Phase 1) for generating the intent solution, to determine the second time information, and sends the second time information to the second network element. In addition, the second network element may determine time (namely, the time in Phase 2) for converting the intent solution into the intent operation, and the second network element adds the fourth time obtained from the fourth network element and the time in Phase 2 determined by the second network element, to obtain the second time (namely, time obtained by adding the time in Phase 1 and the time in Phase 2) for generating the intent operation.

In addition, when the third time is the time for completing the intent operation, after determining the second time, the second network element may determine estimated time for performing the intent operation (namely, the time in Phase 3). After adding the second time, the time in Phase 2, and the time in Phase 3, the second network element may obtain the third time for completing the intent operation. When the third time is the time for starting to perform the intent operation, or the time for completing delivering of the intent operation, after determining the second time, the second network element may determine estimated time for completing delivering of the intent operation. After adding the second time and the time for completing delivering of the intent operation, the second network element may obtain the third time for starting to perform the intent operation.

In a possible implementation, the first network element may indicate the second network element to determine the second time. In the method 400, step S405 may be further performed before step S402.

Optionally, in S405, the first network element sends second indication information to the second network element, and correspondingly, the second network element receives the second indication information from the first network element.

The second indication information indicates the second network element to determine the second time.

The first network element may separately send the second indication information to the second network element, or may combine the first time information and the second indication information and send combined information to the second network element. After receiving the second indication information, the second network element learns that the time for generating the intent solution needs to be determined.

In a possible implementation, the second network element may further return, to the first network element, a reason why the feedback information cannot be sent within the first time. The method 400 may further include step S406.

Optionally, in S406, the second network element sends reason information to the first network element, and correspondingly, the first network element receives the reason information from the second network element.

The reason information indicates a reason why the second network element does not send the feedback information within the first time.

For example, the reason information may indicate that the time for generating the intent operation exceeds a first threshold, and the first threshold may be the first time.

Therefore, in this application, the second network element determines the second time for generating the intent operation. If the intent operation cannot be generated within the first time indicated by the first network element for sending, the second network element does not send the feedback information within the first time, but sends the first indication information to the first network element, to indicate that the feedback information is not sent or indicate that the feedback information is to be sent within the third time. This can reduce signaling resource consumption and improve intent management efficiency.

FIG. 5 is a schematic flowchart of an intent management method 500 according to an embodiment of this application.

S501: A first network element sends expectation information to a second network element, and correspondingly, the second network element receives the expectation information from the first network element.

The expectation information indicates expected time for completing an intent operation corresponding to a first intent, or the expectation information indicates expected time for achieving a first intent. The time may be expected total time for completing Phase 1, Phase 2, and Phase 3 described in FIG. 2.

The first network element may send the expectation information to the second network element when requesting to create the first intent. For example, the first network element may alternatively use an intent creation request message to carry the expectation information, and send, to the second network element, the intent creation request message carrying the expectation information.

The first network element may alternatively send the expectation information to the second network element after the second network element feeds back, to the first network element, the estimated time for completing the intent operation. Optionally, the first network element receives notification information from the second network element, where the notification information indicates the estimated time for completing the intent operation. For example, the notification information may be the first indication information in the method 400, the first indication information indicates that the second network element is to send the feedback information within third time, and the third time is the estimated time for completing the intent operation.

S502: The second network element sends solution indication information to a fourth network element based on the expectation information, and correspondingly, the fourth network element receives the solution indication information from the second network element.

The solution indication information indicates to reduce time for generating an intent solution of the first intent.

Optionally, when the time indicated by the expectation information is less than a preset threshold, the second network element sends the solution indication information to the fourth network element.

Optionally, the solution indication information may indicate the fourth network element to adjust a manner of generating the intent solution, or indicate the fourth network element to optimize an algorithm for generating the intent solution.

Optionally, the solution indication information further indicates expected analysis time for generating the intent solution.

The second network element may determine the analysis time based on the expectation information, time for generating the intent operation, and time for performing the intent operation. For example, the second network element may determine second time for generating the intent operation and the time for performing the intent operation, and subtract the second time and the time for performing the intent operation from the time indicated by the expectation information, to obtain the expected analysis time for generating the intent solution.

In this case, the solution indication information may be the expected analysis time for generating the intent solution, and the analysis time may indicate the fourth network element to reduce the time for generating the intent solution of the first intent.

Optionally, the second network element may alternatively send, to the fourth network element, the solution indication information and time indication information indicating the analysis time. In this case, the method 500 further includes: The second network element sends the time indication information to the fourth network element, where the time indication information indicates the analysis time for generating the intent solution.

Optionally, in S503, the fourth network element generates the intent solution based on the solution indication information.

After receiving the solution indication information indicating to reduce the time for generating the intent solution, the fourth network element may adjust a manner of generating the intent solution, for example, perform algorithm optimization, to reduce the time for generating the intent solution.

When the solution indication information further indicates the expected analysis time for generating the intent solution, or when the fourth network element receives the time indication information from the second network element, the fourth network element generates the intent solution based on the analysis time, so that generation of the intent solution is completed within the analysis time.

For example, the fourth network element may optimize an analysis manner based on a running parameter of a system and the analysis time, so that generation of the intent solution is completed within the analysis time.

Therefore, in this application, the first network element may send, to the second network element, the expectation information indicating the expected time for completing the intent operation, and the second network element may send, to the fourth network element, the solution indication information indicating to reduce the time for generating the intent solution. This can improve intent management efficiency.

FIG. 6 is a schematic flowchart of an intent management method 600 according to an embodiment of this application.

Optionally, in S601, a first network element sends an intent creation request message to a second network element, and correspondingly, the second network element receives the intent creation request message from the first network element.

The intent creation request message is used to request to create a first intent.

Optionally, the intent creation request message includes reporting indication information (ReportException), and the reporting indication information may indicate time in which the second network element sends a feedback message; or the reporting indication information may indicate a periodicity in which the second network element sends a feedback message; or the reporting indication information may indicate a periodicity in which the second network element sends a feedback message and time in which the second network element sends the feedback message for the first time.

Optionally, in S602, the second network element sends an optimization task setting message to a fourth network element, and correspondingly, the fourth network element receives the optimization task setting message from the second network element.

The optimization task setting message is used to request to obtain an intent solution corresponding to the first intent.

The optimization task setting message may include an intent expression of the first intent, and the fourth network element generates, based on the intent expression, the intent solution corresponding to the first intent.

S603: The second network element sends first information to the first network element, and correspondingly, the first network element receives the first information from the second network element.

The first information indicates that the first intent is not achieved.

For example, the second network element may use the feedback message to carry the first information. For descriptions of the first information, refer to the descriptions of step S301 in the method 300. For brevity, details are not described herein again.

S604: The second network element sends second information to the first network element, and correspondingly, the first network element receives the second information from the second network element.

The second information indicates that an intent operation corresponding to the first intent is not performed.

The second network element may use the feedback message to carry the second information. For descriptions of the second information, refer to the descriptions of step S302 in the method 300. For brevity, details are not described herein again.

It should be understood that, when the second network element periodically sends the feedback message, each feedback message may carry information indicating whether the first intent is achieved and information indicating whether the intent operation of the first intent is performed. When the second network element sends the feedback message, if the first intent is not achieved, and the intent operation is not performed, the feedback message carries the first information indicating that the first intent is not achieved and the second information indicating that the intent operation is not performed.

S605: The first network element determines, based on the first information and the second information, not to adjust the first intent.

For descriptions of determining, by the first network element, not to adjust the first intent, refer to the descriptions of step S303 in the method 300. For brevity, details are not described herein again.

It should be understood that if the second network element periodically sends the feedback message, and feedback messages that are sent the first N times carry the first information and the second information, it indicates that the first intent is not achieved in a process of sending the feedback message the N times, and the intent operation is not performed. In this case, the first network element does not adjust the first intent in the process.

Optionally, in S606, the fourth network element sends the intent solution to the second network element, and correspondingly, the second network element receives the intent solution from the fourth network element.

For example, an optimization suggestion output message sent by the fourth network element to the second network element in response to the optimization task setting message carries the intent solution.

Optionally, in S607, the second network element determines the intent operation based on the intent solution.

The second network element may determine a to-be-executed intent solution from one or more received intent solutions, and determines, based on the intent solution, the intent operation that needs to be executed.

Optionally, in S608, the second network element sends the intent operation to a third network element.

It should be understood that the feedback message sent by the second network element before step S608 carries the first information indicating that the first intent is not achieved and the second information indicating that the intent operation is not performed. A feedback message sent by the second network element after step S608 and before the first intent is achieved carries the first information indicating that the first intent is not achieved and information indicating that the intent operation is performed. The second network element may determine, based on the information indicating that the intent operation is performed, to adjust the first intent.

Therefore, in this application, the first network element receives, one or more times, the first information indicating that the first intent is not achieved. Because the first network element also receives the second information indicating that the intent operation is not performed, the first network element does not adjust the first intent because the first network element mistakenly considers, due to receiving of the first information or reaching of a predetermined quantity of times of receiving of the first information, that an exception occurs when the intent operation is performed or expected effect cannot be achieved after the intent operation is performed. The first network element may determine, based on the first information and the second information, that the first intent does not need to be adjusted. This can improve an intent achievement rate, and improve intent management efficiency.

FIG. 7 is a schematic flowchart of an intent management method 700 according to an embodiment of this application.

S701: A first network element sends first time information to a second network element, and correspondingly, the second network element receives the first time information from the first network element.

The first time information indicates first time in which the second network element sends feedback information, and the feedback information indicates whether a first intent is achieved.

For example, the first network element sends, to the second network element, an intent creation request message used to request to create the first intent, where the intent creation request message carries the first time information. The first time information may be reporting indication information in the intent creation request message.

For descriptions of the first time information, refer to the descriptions of step S401 in the method 400. For brevity, details are not described herein again.

Optionally, in S702, the second network element sends a first request message to a fourth network element, and correspondingly, the fourth network element receives the first request message from the second network element.

The first request message is used to request to obtain second time information, and the second time information indicates fourth time for generating an intent solution corresponding to the first intent.

For example, the first request message may be an optimization analysis time-consuming request message, and the message may carry an intent expression of the first intent. The fourth network element may determine, based on the intent expression, the estimated fourth time for generating an intent solution.

Optionally, in S703, the fourth network element sends the second time information to the second network element, and correspondingly, the second network element receives the second time information from the fourth network element.

For example, the fourth network element sends an optimization analysis time-consuming notification message to the second network element in response to the first request message or the optimization analysis request time-consuming message, where the message carries the second time information, and the second time information may be analysis time information (analysi sduration).

S704: The second network element determines second time based on the second time information, where the second time is time for generating an intent operation corresponding to the first intent.

For descriptions of determining, by the second network element, the second time based on the second time information, refer to the descriptions of step S404 in the method 400. For brevity, details are not described herein again.

The second network element may determine whether the first time is shorter than the second time. When the first time is not shorter than the second time, it indicates that the second network element may generate the intent operation within the first time that is indicated by the first network element for sending feedback information, so that the second network element may send the feedback information to the first network element within the first time. When the first time is shorter than the second time, step S705 is performed.

S705: When the first time is shorter than the second time, the second network element sends first indication information to the first network element, and correspondingly, the first network element receives the first indication information from the second network element.

The first indication information indicates that the second network element does not send the feedback information within the first time, or the first indication information indicates that the second network element is to send the feedback information within third time. When the first indication information indicates that the second network element is to send the feedback information within the third time, before sending the first indication information, the second network element further determines the third time based on the second time information. For specific descriptions, refer to the descriptions of step S403 in the method 400. For brevity, details are not described herein again.

For example, the second network element sends an intent creation response message to the first network element in response to the intent creation request message, and uses the intent creation response message to carry the first indication information.

For another example, the second network element sends an intent feedback exception notification message to the first network element, and uses the intent feedback exception notification message to carry the first indication information.

Optionally, the intent creation request response message or the intent feedback exception notification message further includes at least one of the following information: identification information (intentID) of the intent, indication information (isRegular) indicating whether an exception occurs during intent execution, and reason information indicating that the second network element does not send the feedback information within the first time. When a value of the reason information indicates timeout (periodtimeout), it may indicate that time for generating the intent operation by the second network element exceeds a first threshold.

When the first indication information indicates that the second network element does not send the feedback information within the first time, the method 700 may further include steps S706 and S707.

Optionally, in S706, the first network element sends a query message to the second network element, and correspondingly, the second network element receives the query message from the first network element.

The query message is used to request to obtain the third time in which the second network element is to send the feedback information.

Optionally, the query message may further carry the identification information of the intent.

Optionally, in S707, the second network element sends a query response message to the first network element, and correspondingly, the first network element receives the query response message from the second network element.

The query response message is used to respond to the query message. The query response message carries time information (processduration) indicating the third time.

Therefore, in this application, the second network element determines the second time for generating the intent operation. If the second network element determines, by comparing the first time with the second time, that the intent operation cannot be generated within the first time, the second network element does not send the feedback information within the first time, but sends the first indication information to the first network element, to indicate that the feedback information is not sent or indicate that the feedback information is to be sent within the third time. This can reduce signaling resource consumption and improve intent management efficiency.

FIG. 8 is a schematic flowchart of an intent management method 800 according to an embodiment of this application.

Optionally, for S801 to S805, refer to descriptions of steps S701 to S705 in the method 700. For brevity, details are not described herein again.

S806: A first network element sends expectation information to a second network element, and correspondingly, the second network element receives the expectation information from the first network element.

The expectation information indicates expected time for completing an intent operation corresponding to a first intent, or the expectation information indicates expected time for achieving a first intent. For descriptions of the expectation information, refer to the descriptions of step S501 in the method 500. For brevity, details are not described herein again.

For example, the first network element sends an intent feedback exception notification response message to the second network element in response to an intent feedback exception notification message, where the intent feedback exception notification response message carries the expectation information. If the intent feedback exception notification message further includes first indication information indicating that feedback information is to be sent within third time, the intent feedback exception notification response message may further carry attitude indication information (attitude) indicating whether to agree with the first indication information. When the attitude indication information indicates that the second network element is agreed to send the feedback information within the third time, the expectation information may be the attitude indication information, and expected time for completing an intent operation is the third time. When the attitude indication information indicates that the feedback information is not agreed to be sent within the third time, the expectation information may be expected time information (expectedTime) determined by the first network element.

S807: The second network element sends solution indication information to a fourth network element based on the expectation information, and correspondingly, the fourth network element receives the solution indication information from the second network element.

The solution indication information indicates to reduce time for generating an intent solution of a first intent.

The solution indication information may be expected analysis time (recommendationAnalysisDuration) for generating the intent solution.

For descriptions of step S807, refer to the descriptions of step S502 in the method 500. For brevity, details are not described herein again.

For example, the second network element sends an optimization analysis time-consuming message to the fourth network element, and the optimization analysis time-consuming message carries the solution indication information.

Optionally, in S808, the fourth network element determines, based on the solution indication information, whether the intent solution can be generated within the analysis time.

For example, the fourth network element may obtain, based on the analysis time, shortest time for generating the intent solution, and compare the shortest time with the analysis time to determine whether the intent solution can be generated within the analysis time.

If the fourth network element determines that the intent solution can be generated within the analysis time, step S809 to step S812 are performed.

Optionally, in S809, the fourth network element determines the intent solution based on the solution indication information.

For descriptions of step S809, refer to the descriptions of step S503 in the method 500. For brevity, details are not described herein again.

Optionally, in S810, the fourth network element sends the intent solution to the second network element, and correspondingly, the second network element receives the intent solution from the fourth network element.

For example, the fourth network element sends an optimization suggestion output message to the second network element in response to an optimization task setting message, where the optimization suggestion output message carries the intent solution.

Optionally, in S811, the second network element determines the intent operation based on the intent solution.

The second network element may determine a to-be-executed intent solution from one or more received intent solutions, and determines, based on the intent solution, an intent operation that needs to be executed.

Optionally, in S812, the second network element sends the intent operation to a third network element.

Optionally, in S813, the second network element sends feedback information to the first network element, and correspondingly, the first network element receives the feedback information from the second network element.

The feedback information indicates whether the first intent is achieved.

If the fourth network element determines that the intent solution cannot be generated within the analysis time, step S814 and step S815 are performed.

Optionally, in S814, the fourth network element sends third information to the second network element, and correspondingly, the second network element receives the third information from the fourth network element.

The third information indicates that the intent solution cannot be generated within the analysis time.

For example, the fourth network element sends an analysis time-consuming reject notification message to the second network element in response to the optimization analysis time-consuming message, where the analysis time-consuming reject notification message carries the third information.

Optionally, in S815, the second network element sends fourth information to the first network element, and correspondingly, the first network element receives the fourth information from the second network element.

The fourth information indicates that the intent solution cannot be generated within the analysis time. The fourth information may be the same information as the third information, or may be generated by the second network element based on the third information.

For example, the second network element sends an expectation feedback reject notification message to the first network element, where the expectation feedback reject notification message carries the third information.

Therefore, in this application, the first network element may send, to the second network element, expectation information indicating expected time for completing the intent operation, and the second network element may send, to the fourth network element, the solution indication information indicating to reduce time for completing generation of the intent operation. This can improve intent management efficiency.

FIG. 9 is a schematic flowchart of an intent management method 900 according to an embodiment of this application.

S901: A first network element sends expectation information to a second network element, and correspondingly, the second network element receives the expectation information from the first network element.

The expectation information indicates expected time for completing an intent operation corresponding to a first intent, or the expectation information indicates expected time for achieving a first intent. For descriptions of the expectation information, refer to the descriptions of step S501 in the method 500. For brevity, details are not described herein again.

For example, the first network element sends an intent creation request message to the second network element, where the intent creation request message carries the expectation information.

Optionally, the intent creation request message alternatively includes first time information. For descriptions of the first time information, refer to the descriptions of step S601 in the method 600. For brevity, details are not described herein again.

The second network element may determine solution indication information based on the expectation information.

The solution indication information indicates to reduce time for generating an intent solution of the first intent.

The solution indication information may be expected analysis time (recommendationAnalysisDuration) for generating the intent solution. For descriptions about determining the analysis time by the second network element, refer to the descriptions of step S502 in the method 500.

S902: The second network element sends the solution indication information to a fourth network element based on the expectation information, and correspondingly, the fourth network element receives the solution indication information from the second network element.

The solution indication information indicates to reduce the time for generating the intent solution of the first intent.

For descriptions of step S902, refer to the descriptions of step S502 in the method 500. For brevity, details are not described herein again.

Optionally, the second network element sends an optimization task setting message to the fourth network element, where the optimization task setting message carries the solution indication information.

Optionally, in S903, the fourth network element determines the intent solution based on the solution indication information.

For descriptions of step S903, refer to the descriptions of step S503 in the method 500. For brevity, details are not described herein again.

Optionally, in S904, the fourth network element sends the intent solution to the second network element, and correspondingly, the second network element receives the intent solution from the fourth network element.

For example, the fourth network element sends an optimization suggestion output message to the second network element in response to the optimization task setting message, where the optimization suggestion output message carries the intent solution.

Optionally, in S905, the second network element determines an intent operation based on the intent solution.

The second network element may determine a to-be-executed intent solution from one or more received intent solutions, and determines, based on the intent solution, an intent operation that needs to be performed.

Optionally, in S906, the second network element sends the intent operation to a third network element.

Optionally, in S907, the second network element sends feedback information to the first network element, and correspondingly, the first network element receives the feedback information from the second network element.

The feedback information indicates whether the first intent is achieved.

Therefore, in this application, the first network element may send, to the second network element, the expectation information indicating expected time for completing the intent operation, and the second network element may send, to the fourth network element, the solution indication information indicating to reduce time for completing generation of the intent operation. This can improve intent management efficiency.

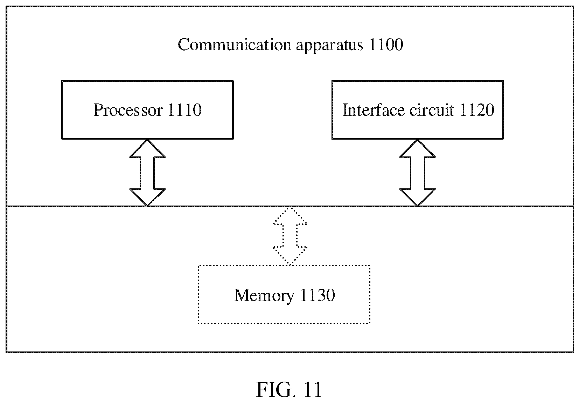

FIG. 10 and FIG. 11 are diagrams of structures of possible communication apparatuses according to an embodiment of this application. These communication apparatuses may be configured to implement functions of the first network element, the second network element, the third network element, and the fourth network element in the foregoing method embodiments, and therefore can also implement beneficial effect of the foregoing method embodiments. In embodiments of this application, the communication apparatus may be the first network element, the second network element, the third network element, and the fourth network element, or may be modules (for example, chips) used in the first network element, the second network element, the third network element, and the fourth network element.

As shown in FIG. 10, a communication apparatus 1000 includes a processing unit 1010 and a transceiver unit 1020. The communication apparatus 1000 is configured to implement the functions of the first network element and the second network element in the method embodiment shown in FIG. 3. Alternatively, the communication apparatus 1000 may include a module configured to implement any function or operation of the first network element and the second network element in the method embodiment shown in FIG. 3. The module may be completely or partially implemented by using software, hardware, firmware, or any combination thereof.

When the communication apparatus 1000 is configured to implement the function of the first network element in the method embodiment shown in FIG. 3, the transceiver unit 1020 is configured to receive first information from the second network element, where the first information indicates that a first intent is not achieved. The transceiver unit 1020 is further configured to receive second information from the second network element, where the second information indicates that an intent operation corresponding to the first intent is not performed. The processing unit 1010 is configured to determine, based on the first information and the second information, not to adjust the first intent.

Therefore, in this application, the first network element receives the first information indicating that the first intent is not achieved. Because the first network element also receives the second information indicating that the intent operation is not performed, the first network element does not adjust the first intent because the first network element mistakenly considers, due to receiving of the first information, that an exception occurs when the intent operation is performed or expected effect cannot be achieved after the intent operation is performed. The first network element may determine, based on the first information and the second information, that the first intent does not need to be adjusted. This avoids processes such as re-translation and solution generation caused by intent adjustment. Further, an intent achievement rate can be improved, and intent management efficiency can be improved.

Optionally, when the communication apparatus 1000 is configured to implement the function of the first network element in the method embodiment shown in FIG. 3, that the second information indicates that the intent operation corresponding to the first intent is not performed includes: The intent operation corresponding to the first intent is not sent to the third network element, or the intent operation corresponding to the first intent is not performed after being sent to the third network element.

Therefore, in this application, the second network element may notify the first network element that the intent operation is not sent to the third network element or is not performed after being sent to the third network element. This improves flexibility of intent management.

Optionally, when the communication apparatus 1000 is configured to implement the function of the first network element in the method embodiment shown in FIG. 3, when the transceiver unit 1020 receives the first information a plurality of times, the processing unit 1010 is configured to determine, based on the first information and the second information, not to adjust the first intent.

Therefore, in this application, the first network element receives the first information a plurality of times. Because the first network element also receives the second information indicating that the intent operation is not performed, the first network element does not adjust the first intent because the first information is received predetermined quantity of times. This can improve intent management efficiency.

Optionally, when the communication apparatus 1000 is configured to implement the function of the first network element in the method embodiment shown in FIG. 3, the processing unit 1010 specifically determines, based on the first information and the second information, not to perform any one of the following operations on the first intent: a modification operation, a deletion operation, or a deactivation operation.

For more detailed descriptions of the processing unit 1010 and the transceiver unit 1020, directly refer to related descriptions in the method embodiment shown in FIG. 3. Details are not described herein again.

When the communication apparatus 1000 is configured to implement the function of the second network element in the method embodiment shown in FIG. 3, the processing unit 1010 is configured to generate first information and second information, where the first information indicates that the first intent is not achieved, and the second information indicates that an intent operation corresponding to the first intent is not performed. The transceiver unit 1020 is configured to send the first information and the second information to the first network element.

Therefore, in this application, the second network element sends the first information and the second information to the first network element, and the first network element does not adjust the first intent because the first network element mistakenly considers, due to receiving of the first information, that an exception occurs when the intent operation is performed or expected effect cannot be achieved after the intent operation is performed. The first network element may determine, based on the first information and the second information, that the first intent does not need to be adjusted. This avoids processes such as re-translation and solution generation caused by intent adjustment. Further, an intent achievement rate can be improved, and intent management efficiency can be improved.

Optionally, when the communication apparatus 1000 is configured to implement the function of the second network element in the method embodiment shown in FIG. 3, that the second information indicates that the intent operation corresponding to the first intent is not performed includes: The intent operation corresponding to the first intent is not sent to the third network element, or the intent operation corresponding to the first intent is not performed after being sent to the third network element.

For more detailed descriptions of the processing unit 1010 and the transceiver unit 1020, directly refer to related descriptions in the method embodiment shown in FIG. 3. Details are not described herein again.

When the communication apparatus 1000 is configured to implement the function of the second network element in the method embodiment shown in FIG. 4, the transceiver unit 1020 is configured to receive first time information from the first network element, where the first time information indicates first time in which the second network element sends feedback information, and the feedback information indicates whether a first intent is achieved. The processing unit 1010 is configured to determine second time, where the second time is time for generating an intent operation corresponding to the first intent. When the first time is shorter than the second time, the transceiver unit 1020 is further configured to send first indication information to the first network element, where the first indication information indicates that the second network element does not send the feedback information within the first time, or the first indication information indicates that the second network element is to send the feedback information within third time, and the third time is determined based on the second time.

Therefore, in this application, the second network element determines the second time for generating the intent operation. If the second network element determines, by comparing the first time with the second time, that the intent operation cannot be generated within the first time, the second network element does not send the feedback information within the first time, but sends the first indication information to the first network element, to indicate that the feedback information is not sent or indicate that the feedback information is to be sent within the third time. This can reduce signaling resource consumption and improve intent management efficiency.

Optionally, when the communication apparatus 1000 is configured to implement the function of the second network element in the method embodiment shown in FIG. 4, the transceiver unit 1020 is further configured to receive second time information from the fourth network element, where the second time information indicates fourth time for generating an intent solution corresponding to the first intent. The processing unit 1010 is specifically configured to determine the second time based on the second time information.

Therefore, in this application, the second network element may obtain, from the fourth network element, the fourth time for generating the intent solution, to determine the fourth time for generating the intent operation. This can improve reliability of intent management.

Optionally, when the communication apparatus 1000 is configured to implement the function of the second network element in the method embodiment shown in FIG. 4, the third time is time for completing the intent operation.

Therefore, in this application, the second network element may send the feedback information to the first network element after the intent operation is performed. This can improve intent management efficiency.

Optionally, when the communication apparatus 1000 is configured to implement the function of the second network element in the method embodiment shown in FIG. 4, the transceiver unit 1020 is further configured to receive second indication information from the first network element, where the second indication information indicates the second network element to determine the second time.

Therefore, in this application, the first network element may indicate the second network element to determine the second time. This improves flexibility of intent management.

Optionally, when the communication apparatus 1000 is configured to implement the function of the second network element in the method embodiment shown in FIG. 4, the transceiver unit 1020 is further configured to send reason information to the first network element, where the reason information indicates a reason why the second network element does not send the feedback information within the first time.

Therefore, in this application, the second network element may notify the first network element of a reason why feedback cannot be performed on time. This improves flexibility of intent management.

For more detailed descriptions of the processing unit 1010 and the transceiver unit 1020, directly refer to related descriptions in the method embodiment shown in FIG. 4. Details are not described herein again.

When the communication apparatus 1000 is configured to implement the function of the first network element in the method embodiment shown in FIG. 4, the processing unit 1010 is configured to generate first time information; and the transceiver unit 1020 is configured to send the first time information to the second network element, where the first time information indicates first time in which the second network element sends feedback information, the feedback information indicates whether a first intent is achieved, and the first time information is further used to determine second time. When the first time is shorter than the second time, the transceiver unit 1020 is further configured to receive first indication information from the second network element, where the first indication information indicates that the second network element does not send the feedback information within the first time, or the first indication information indicates that the second network element is to send the feedback information within third time, and the third time is determined based on the second time.

Therefore, in this application, the second network element determines second time for generating an intent operation. If the second network element determines, by comparing the first time with the second time, that the intent operation cannot be generated within the first time, the second network element does not send the feedback information within the first time, but sends the first indication information to the first network element, to indicate that the feedback information is not sent or indicate that the feedback information is to be sent within the third time. This can reduce signaling resource consumption and improve intent management efficiency.

Optionally, when the communication apparatus 1000 is configured to implement the function of the first network element in the method embodiment shown in FIG. 4, the third time is time for completing the intent operation.

Optionally, when the communication apparatus 1000 is configured to implement the function of the first network element in the method embodiment shown in FIG. 4, the transceiver unit 1020 is further configured to send second indication information to the second network element, where the second indication information indicates the second network element to determine the second time.

Optionally, when the communication apparatus 1000 is configured to implement the function of the first network element in the method embodiment shown in FIG. 4, the transceiver unit 1020 is further configured to receive reason information from the second network element, where the reason information indicates a reason why the second network element does not send the feedback information within the first time.

For more detailed descriptions of the processing unit 1010 and the transceiver unit 1020, directly refer to related descriptions in the method embodiment shown in FIG. 4. Details are not described herein again.

When the communication apparatus 1000 is configured to implement the function of the second network element in the method embodiment shown in FIG. 5, the transceiver unit 1020 is configured to receive expectation information from the first network element, where the expectation information indicates expected time for completing an intent operation corresponding to a first intent. The processing unit 1010 is configured to determine solution indication information based on the expectation information. The transceiver unit 1020 is further configured to send the solution indication information to the fourth network element, where the solution indication information indicates to reduce time for generating an intent solution of the first intent.

Therefore, in this application, the first network element may send, to the second network element, the expectation information indicating the expected time for completing the intent operation, and the second network element may send, to the fourth network element, the solution indication information indicating to reduce the time for generating the intent solution. This can improve intent management efficiency.

Optionally, when the communication apparatus 1000 is configured to implement the function of the second network element in the method embodiment shown in FIG. 5, the processing unit 1010 is further configured to determine time indication information based on the expectation information, where the time indication information indicates expected analysis time for generating the intent solution. The transceiver unit 1020 is further configured to send the time indication information to the fourth network element.

Therefore, in this application, the second network element may obtain, from the fourth network element, fourth time for generating the intent solution, to determine the fourth time for generating the intent operation. This can improve reliability of intent management.

Optionally, when the communication apparatus 1000 is configured to implement the function of the second network element in the method embodiment shown in FIG. 5, the processing unit 1010 is configured to determine, based on the expectation information, the expected analysis time for generating the intent solution, where the solution indication information further indicates the analysis time.

Therefore, in this application, the second network element may send feedback information to the first network element after the intent operation is performed. This can improve intent management efficiency.

Optionally, when the communication apparatus 1000 is configured to implement the function of the second network element in the method embodiment shown in FIG. 5, before the transceiver unit 1020 is configured to receive the expectation information from the first network element, the transceiver unit 1020 is further configured to send notification information to the first network element, where the notification information indicates estimated time for completing the intent operation.

Therefore, in this application, the first network element may indicate the second network element to determine the second time. This improves flexibility of intent management.

For more detailed descriptions of the processing unit 1010 and the transceiver unit 1020, directly refer to related descriptions in the method embodiment shown in FIG. 5. Details are not described herein again.

When the communication apparatus 1000 is configured to implement the function of the fourth network element in the method embodiment shown in FIG. 5, the transceiver unit 1020 is configured to receive solution indication information from the second network element, where the solution indication information indicates to reduce time for generating an intent solution of a first intent. The processing unit 1010 is configured to generate the intent solution based on the solution indication information.

Therefore, in this application, the first network element may send, to the second network element, expectation information indicating expected time for completing an intent operation, and the second network element may send, to the fourth network element, the solution indication information indicating to reduce the time for generating the intent solution. This can improve intent management efficiency.

Optionally, when the communication apparatus 1000 is configured to implement the function of the fourth network element in the method embodiment shown in FIG. 5, the transceiver unit 1020 is further configured to receive time indication information from the second network element, where the time indication information indicates expected analysis time for generating the intent solution.

Optionally, when the communication apparatus 1000 is configured to implement the function of the fourth network element in the method embodiment shown in FIG. 5, the solution indication information further indicates the expected analysis time for generating the intent solution.

For more detailed descriptions of the processing unit 1010 and the transceiver unit 1020, directly refer to related descriptions in the method embodiment shown in FIG. 5. Details are not described herein again.

When the communication apparatus 1000 is configured to implement the function of the first network element in the method embodiment shown in FIG. 5, the processing unit 1010 is configured to generate expectation information, where the expectation information indicates expected time for completing an intent operation corresponding to a first intent. The transceiver unit 1020 is configured to send the expectation information to the second network element.

Therefore, in this application, the first network element may send, to the second network element, the expectation information indicating the expected time for completing the intent operation, and the second network element may send, to the fourth network element, the solution indication information indicating to reduce time for generating an intent solution. This can improve intent management efficiency.

Optionally, when the communication apparatus 1000 is configured to implement the function of the first network element in the method embodiment shown in FIG. 5, the transceiver unit 1020 is further configured to receive notification information from the second network element, where the notification information indicates the estimated time for completing the intent operation.

For more detailed descriptions of the processing unit 1010 and the transceiver unit 1020, directly refer to related descriptions in the method embodiment shown in FIG. 5. Details are not described herein again.

As shown in FIG. 11, a communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130 for storing instructions executed by the processor 1110, or input data required by the processor 1110 to run the instructions, or data generated after the processor 1110 runs the instructions.

When the communication apparatus 1100 is configured to implement the method shown in FIG. 3, FIG. 4, or FIG. 5, the processor 1110 is configured to implement a function of the processing unit 1010, and the interface circuit 1120 is configured to implement a function of the transceiver unit 1020.

When the communication apparatus 1100 is configured to implement the method shown in FIG. 3, FIG. 4, or FIG. 5, the communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130 for storing instructions executed by the processor 1110, or input data required by the processor 1110 to run the instructions, or data generated after the processor 1110 runs the instructions.

When the communication apparatus 1100 is configured to implement the method shown in FIG. 3, FIG. 4, or FIG. 5, the processor 1110 is configured to implement a function of the processing unit 710, and the interface circuit 1120 is configured to implement a function of the transceiver unit 720.

When the communication apparatus is a chip used in the first network element, the chip of the first network element implements the function of the first network element in the foregoing method embodiment. The chip of the first network element receives information from another module (for example, a radio frequency module or an antenna) in the first network element, where the information is sent by the second network element to the first network element; or the chip of the first network element sends information to another module (for example, a radio frequency module or an antenna) in the first network element, where the information is sent by the first network element to the second network element.

When the communication apparatus is a chip used in the second network element, the chip of the second network element implements the function of the second network element in the foregoing method embodiment. The chip of the second network element receives information from another module (for example, a radio frequency module or an antenna) in the second network element, where the information is sent by the first network element, the third network element, or the fourth network element to the second network element; or the chip of the second network element sends information to another module (for example, a radio frequency module or an antenna) in the second network element, where the information is sent by the first network element, the third network element, or the fourth network element to the second network element.

When the communication apparatus is a chip used in the fourth network element, the chip of the fourth network element implements the function of the fourth network element in the foregoing method embodiment. The chip of the fourth network element receives information from another module (for example, a radio frequency module or an antenna) in the fourth network element, where the information is sent by the second network element to the fourth network element; or the chip of the fourth network element sends information to another module (for example, a radio frequency module or an antenna) in the fourth network element, where the information is sent by the second network element to the fourth network element.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device like a server integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", and the like are merely used to distinguish between different objects, for example, to distinguish between different network devices, and constitute no limitation on the scope of embodiments of this application. Embodiments of this application are not limited thereto.

It should be further understood that, in this application, both "when ..." and "if" mean that a network element performs corresponding processing in an objective situation, and are not intended to limit time. The terms do not mean that the network element is required to have a determining action during implementation, and do not mean any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that numerical symbols involved in embodiments of this application are differentiated merely for ease of description, but are not used to limit the scope of embodiments of this application. The sequence numbers of the foregoing processes do not mean execution sequences, and the execution sequences of the processes should be determined based on functions and internal logic of the processes.

## Claims

1. An intent management method, wherein the method comprises:
receiving, by a first network element, first information from a second network element, wherein the first information indicates that a first intent is not achieved;
receiving, by the first network element, second information from the second network element, wherein the second information indicates that an intent operation corresponding to the first intent is not performed; and
determining, by the first network element based on the first information and the second information, not to adjust the first intent.

2. The method according to claim 1, wherein that the second information indicates that an intent operation corresponding to the first intent is not performed comprises:
the intent operation corresponding to the first intent is not sent to a third network element; or
the intent operation corresponding to the first intent is not performed after being sent to a third network element.

3. The method according to claim 1 or 2, wherein when the first network element receives the first information from the second network element a plurality of times, the determining, by the first network element based on the first information and the second information, not to adjust the first intent comprises:
determining, by the first network element based on the first information and the second information, not to adjust the first intent.

4. The method according to any one of claims 1 to 3, wherein the determining, by the first network element based on the first information and the second information, not to adjust the first intent comprises:
determining, by the first network element based on the first information and the second information, not to perform any one of the following operations on the first intent: a modification operation, a deletion operation, or a deactivation operation.

5. An intent management method, wherein the method comprises:
receiving, by a second network element, first time information from a first network element, wherein the first time information indicates first time in which the second network element sends feedback information, and the feedback information indicates whether a first intent is achieved;
determining, by the second network element, second time, wherein the second time is time for generating an intent operation corresponding to the first intent; and
sending, by the second network element, first indication information to the first network element when the first time is shorter than the second time, wherein the first indication information indicates that the second network element does not send the feedback information within the first time, or the first indication information indicates that the second network element is to send the feedback information within third time, and the third time is determined based on the second time.

6. The method according to claim 5, wherein the method further comprises:
receiving, by the second network element, second time information from a fourth network element, wherein the second time information indicates fourth time for generating an intent solution corresponding to the first intent; and
the determining, by the second network element, second time comprises:
determining, by the second network element, the second time based on the second time information.

7. The method according to claim 5 or 6, wherein the third time is time for completing the intent operation.

8. The method according to any one of claims 5 to 7, wherein the method further comprises:
receiving, by the second network element, second indication information from the first network element, wherein the second indication information indicates the second network element to determine the second time.

9. The method according to any one of claims 5 to 8, wherein the method further comprises:
sending, by the second network element, reason information to the first network element, wherein the reason information indicates a reason why the second network element does not send the feedback information within the first time.

10. An intent management method, wherein the method comprises:
receiving, by a second network element, expectation information from a first network element, wherein the expectation information indicates expected time for completing an intent operation corresponding to a first intent; and
sending, by the second network element, solution indication information to a fourth network element based on the expectation information, wherein the solution indication information indicates to reduce time for generating an intent solution of the first intent.

11. The method according to claim 10, wherein the method further comprises:
determining, by the second network element, time indication information based on the expectation information, wherein the time indication information indicates expected analysis time for generating the intent solution; and
sending, by the second network element, the time indication information to the fourth network element.

12. The method according to claim 10, wherein the method further comprises:
determining, by the second network element based on the expectation information, expected analysis time for generating the intent solution, wherein the solution indication information further indicates the analysis time.

13. The method according to any one of claims 10 to 12, wherein before the receiving, by a second network element, expectation information from a first network element, the method further comprises:
sending, by the second network element, notification information to the first network element, wherein the notification information indicates estimated time for completing the intent operation.

14. An intent management method, wherein the method comprises:
receiving, by a fourth network element, solution indication information from a second network element, wherein the solution indication information indicates to reduce time for generating an intent solution of a first intent; and
generating, by the fourth network element, the intent solution based on the solution indication information.

15. The method according to claim 14, wherein the method further comprises:
receiving, by the fourth network element, time indication information from the second network element, wherein the time indication information indicates expected analysis time for generating the intent solution.

16. The method according to claim 14 or 15, wherein the solution indication information further indicates the expected analysis time for generating the intent solution.

17. A communication apparatus for intent management, comprising at least one unit configured to perform the method according to any one of claims 1 to 4, or claims 5 to 9, or claims 10 to 13, or claims 14 to 16.

18. A communication apparatus, comprising at least one processor, wherein the at least one processor is configured to execute a computer program stored in a memory, to enable the apparatus to implement the method according to any one of claims 1 to 4, or claims 5 to 9, or claims 10 to 13, or claims 14 to 16.

19. A computer-readable storage medium, comprising a computer program, wherein when the computer program is run on a computer, the computer is enabled to perform the method according to any one of claims 1 to 4, claims 5 to 9, claims 10 to 13, or claims 14 to 16.
